# EUROPEAN PATENT APPLICATION

(11) **EP 3 605 407 A1**
(43) Date of publication of application: **05.02.2020**
(21) Application number: 18776062.4
(22) Date of filing: 26.01.2018
(51) Int. Cl.: G06N 99/00, G06F 21/16

(54) **INFORMATION PROCESSING DEVICE, INFORMATION PROCESSING METHOD, AND COMPUTER-READABLE STORAGE MEDIUM**

(30) Priority: 31.03.2017 JP 2017072610
(71) Applicant: KDDI Corporation, Tokyo 163-8003 (JP)
(72) Inventor: KOBAYASHI, Tatsuya, Fujimino-shi Saitama 356-8502 (JP)
(74) Representative: Pitchford, James Edward
(86) International application number: PCT/JP2018/002369
(87) International publication number: WO 2018/179765

(57) **Abstract**

An information processing apparatus includes acquisition means for acquiring first training data that includes data and a label for target task learning, and second training data that includes data and a label for watermark detection, and learning means for generating a model parameter constituting a machine learning model for detecting a target task or a watermark based on the first training data and the second training data.

## Description

### TECHNICAL FIELD

The present invention relates to an information processing apparatus, an information processing method, and a computer-readable storage medium.

### BACKGROUND ART

In recent years, speeds of CPUs (central processing unit) and GPUs (graphics processing unit) and capacities of memories have been rapidly increasing, and machine learning techniques have been rapidly advancing. Therefore, machine learning that uses several hundred thousand to several million pieces of learning data is possible, and accurate identification techniques and classification techniques are being established.

### CITATION LIST

### NON-PATENT LITERATURE

NPTL1: Yangqing Jia, Evan Shelhamer, Jeff Donahue, Sergey Karayev, Jonathan Long, Ross Girshick, Sergio Guadarrama, and Trevor Darrell. Caffe: Convolutional architecture for fast feature embedding. In Proceedings of the 22nd ACM international conference on Multimedia (pp. 675-678). ACM.

### SUMMARY OF INVENTION

### TECHNICAL PROBLEM

The calculation cost for executing machine learning that is based on a large amount of learning data is high. In addition, preparation of a large amount of learning data and preprocessing for processing the prepared learning data so as to use the data for machine learning also require a huge amount of effort. On the other hand, a learning model generated through machine learning is digital data, which is easy to duplicate. Furthermore, it is usually difficult to estimate learning data used for generating a learning model, from the learning model itself.

Therefore, if a learning model is illegally used by a third party, it is difficult for a person that has generated the learning model to prove the illegality. Collected learning data and a learning model generated based on the learning data are valuable, having been acquired at great effort, and there is a desire to protect the learning model against illegal use.

### SOLUTION TO PROBLEM

According to an aspect of the present invention, an information processing apparatus includes acquisition means for acquiring first training data that includes data and a label for target task learning, and second training data that includes data and a label for watermark detection, and learning means for generating a model parameter constituting a machine learning model for detecting a target task or a watermark based on the first training data and the second training data.

### ADVANTAGEOUS EFFECTS OF INVENTION

According to the present invention, it is possible to provide a learning model whose origin can be identified.

Further features and advantages of the present invention will become apparent from the following description that is given with reference to the attached drawings. Note that, in the attached drawings, the same reference numerals are assigned to constituent elements that are same or similar.

### BRIEF DESCRIPTION OF DRAWINGS

FIG. 1 is a diagram illustrating an outline of an information processing apparatus according to an embodiment.
FIG. 2 is a functional block diagram of an information processing apparatus according to an embodiment.
FIG. 3 is a diagram illustrating subset generation processing that is executed by a subset generation unit according to an embodiment.
FIG. 4 is a diagram showing the numbers of pieces of training data included in original learning data and subsets according to an embodiment.
FIG. 5 is a flowchart of information processing that is executed by an information processing apparatus according to an embodiment.
FIG. 6 is a flowchart of subset generation processing that is executed by a subset generation unit according to an embodiment.

### DESCRIPTION OF EMBODIMENTS

### Outline of Embodiment

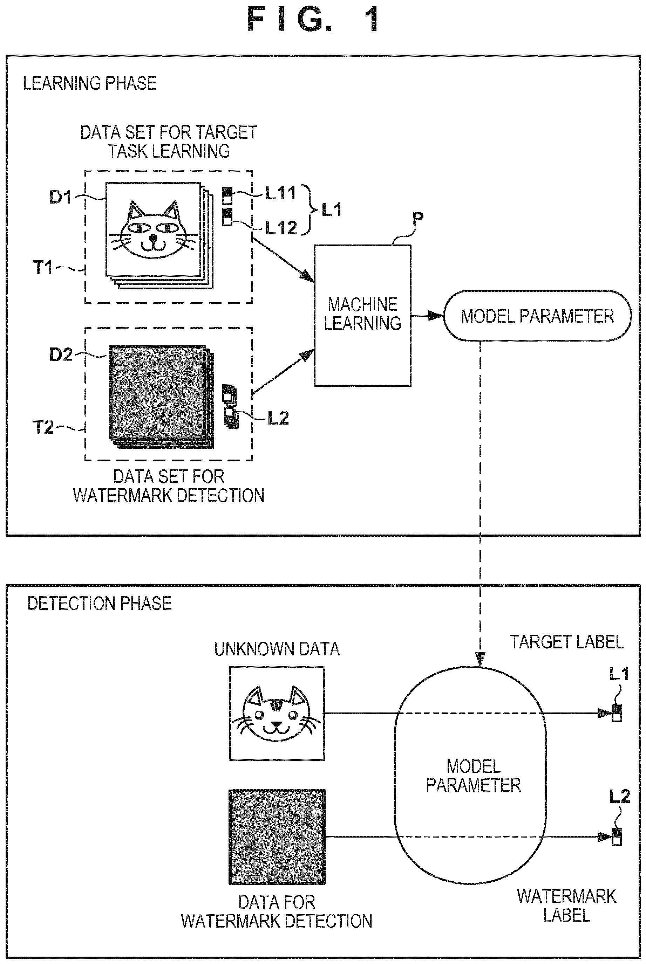

FIG. 1 is a diagram illustrating an outline of an information processing apparatus 1 according to an embodiment of the present invention. The information processing apparatus 1 according to an embodiment of the present invention is an apparatus for generating a learning model for achieving a target task using machine learning. The information processing apparatus 1 is constituted by processors such as a CPU and GPU, a work memory such as a DRAM (dynamic random access memory), and a large-capacity storage apparatus such as an HDD (hard disk drive) or an SSD (solid state drive). The information processing apparatus 1 may also be a single apparatus such as a PC (personal computer), a workstation, or a server, or may also be constituted by a plurality of apparatuses such as a cloud server.

Machine learning that is executed by the information processing apparatus 1 may be any machine learning that is so-called "supervised learning". For example, machine learning that is executed by the information processing apparatus 1 can be any of machine learning of a neural network having a multilayer structure including deep learning, learning of SVM (Support Vector Machine), boosting learning, and the like. In such supervised learning, a learning model, which is a discriminator for discriminating a target task, is generated through learning of training data that includes data and labels for target task learning.

Target tasks to be achieved by the information processing apparatus 1 cover various fields of recognition tasks including image recognition and sound recognition, tasks of games such as go and Japanese chess, tasks of machine translation, and the like. In this embodiment, as an example, a description will be given assuming that a main target task of the information processing apparatus 1 is recognition task.

The information processing apparatus 1 according to an embodiment of the present invention executes two phases, namely a "learning phase" in which a learning model for achieving a target task is generated through learning of training data, and a "detection phase" in which unknown data is processed using the generated learning model. For example, FIG. 1 shows a case where a target task of the information processing apparatus 1 is "dog-or-cat discrimination" that is determination on whether image data is an image of "cat" or an image of "dog".

In order to achieve a dog-or-cat discrimination task, the information processing apparatus 1 according to an embodiment of the present invention learns a dataset constituted by first data D1 composed of a plurality of different images in which a cat or a dog is included as a subject, a label L11 defined in advance for indicating that the subject is a cat, and a label L12 defined in advance for indicating that the subject is a dog. This dataset is a "dataset for target task learning" that is learned by the information processing apparatus 1 in order to achieve the target task, and, for convenience of description, is hereinafter referred to as "first training data T1". Also, the label L11 and the label L12 are referred to as "first labels L1" unless the label L11 and the label L12 are distinguished particularly.

Note that there is no limitation to a case where the target task of the information processing apparatus 1 is a two-class determination task such as "dog-and-cat detection". For example, the target task may also be a task of multi-class detection for performing "bird detection" in addition to the dog-and-cat detection, or may also be a task for determining whether the subject is a cat or another class. In either cases, different pieces of learning data and corresponding labels are prepared respectively for different target tasks.

The number of pieces of first data D1 may be determined through experiments in consideration of the accuracy required for a target task and the difficulty of the target task itself, but is set to several hundred thousand to several million pieces, as an example. The information processing apparatus 1 generates model parameter P that serves as dog-or-cat discriminators for discriminating whether an image is a cat image or a dog image, through learning of the first training data T1 using a machine learning technique such as known deep learning, for example. Note that, when the information processing apparatus 1 generates the model parameter P using a deep learning technique, a set of weights that constitute each layer of a neural network is set as a model parameter P.

The information processing apparatus 1 generates the model parameter P so as to output the label L11 if a "cat image" is input, and output the label L12 if a "dog image" is input. It can be said that, in the model parameter P generated by the information processing apparatus 1, so to speak, abstracted characteristics of "cat" or "dog" has been acquired. Therefore, the model parameter P has a generalization capability for generating the first label L1 indicating that an input image is a cat image or a dog image not only when an image included in the first training data T1 is input, but also when a cat image or a dog image that is not included in the first training data T1 is input.

Here, in order for the information processing apparatus 1 to generate the model parameter P that has high performance, in other words, the model parameter P in which a high generalization capability has achieved, it is important to select an appropriate machine learning technique, and prepare a large number of pieces of high-quality training data. In particular, a large amount of high-quality data itself is valuable as big data. In addition, the larger the number of pieces of training data is, the more calculation resources are required for machine learning that is executed by the information processing apparatus 1. Accordingly, a cost required for preparing big data and a calculation cost required for processing the big data are necessary for generating the model parameter P that has high performance.

In this manner, it can be said that the model parameter P generated by the information processing apparatus 1 is a type of property created at a high cost. In view of this, the information processing apparatus 1 according to an embodiment of the present invention embeds electronic "watermarks" in the model parameter P through machine learning in a process for generating the model parameter P. Specifically, the information processing apparatus 1 generates the model parameter P constituting a machine learning model for detecting a target task and a watermark based on the above-described first training data, a plurality of pieces of second data D2 for watermark detection, and second training data T2 that includes second labels L2 associated with the respective pieces of the second data D2. Here, data formats of the first data D1 and the second data D2 are the same, and data formats of the first labels L1 and the second labels L2 are also the same. In the example shown in FIG. 1, the label L11 or the label L12 is allocated to each of the second labels L2 in advance.

When the second data D2 for watermark detection is input to the model parameter P generated through such learning, the model parameter P outputs the second label L2 associated with the second data D2 that has been input. Usually, when an image that is not used in the training data is input to the model parameter P whose target task is "dog-or-cat discrimination", it is expected that a label corresponding to "dog" or "cat" will be output substantially randomly. In contrast, in the model parameter P subjected to learning of the second training data T2 in advance, when the second data D2 used for learning is input, the second label L2 corresponding to the second data D2 will be output.

Accordingly, the probability that outputs of a plurality of pieces of second data D2 with respect to the model parameter P generated through learning of training data that does not include the second data D2 will all match the second labels L2 associated with the respective pieces of the second data D2 decreases, as the number of images of second data D2 that are input increases. This means that the second labels L2 can be, so to speak, "watermark" of the model parameter P. Even if the model parameter P is plagiarized by a third party, the origin of the model parameter P can be specified if the watermark is detected by the right holder of the model parameter P such as the generator using the second data D2. In addition, the right holder of the model parameter P announcing, in advance, that a watermark is embedded in the model parameter P serves as a deterrent to plagiary of the model parameter P.

As described above, the information processing apparatus 1 according to an embodiment of the present invention can protect the model parameter P, which are a property, by providing a learning model that makes it possible to specify the origin of the model parameter P. The information processing apparatus 1 according to an embodiment of the present invention will be described below in more detail.

### Functional Configuration of Information Processing Apparatus 1

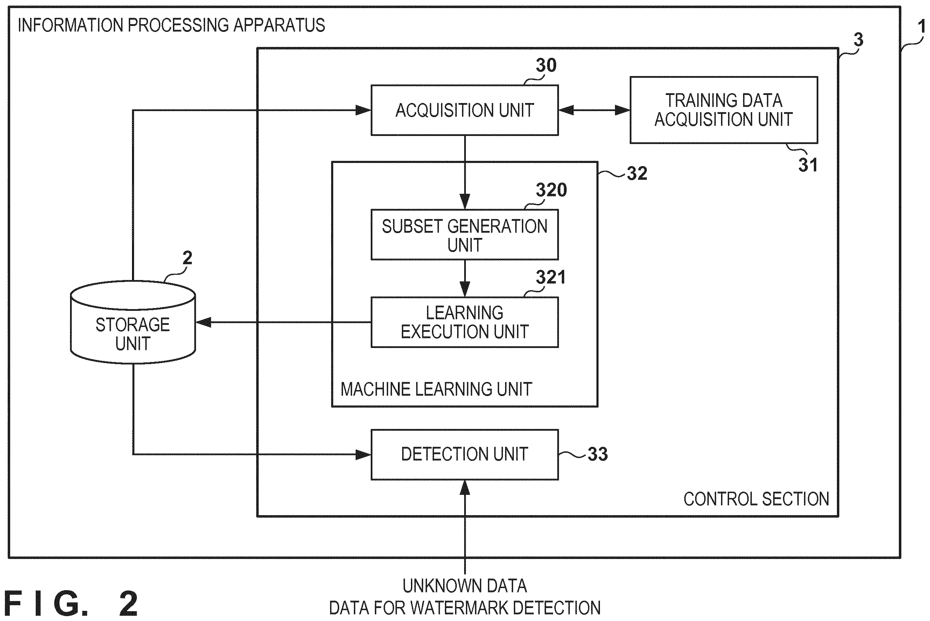

FIG. 2 is a diagram schematically showing the functional configuration of the information processing apparatus 1 according to an embodiment of the present invention. The information processing apparatus 1 according to an embodiment of the present invention is provided with a storage unit 2 and a control unit 3. The control unit 3 is provided with an acquisition unit 30, a training data acquisition unit 31, a machine learning unit 32, and a detection unit 33. The machine learning unit 32 includes a subset generation unit 320 and a learning execution unit 321.

The storage unit 2 is a ROM (read only memory) that stores a BIOS (basic input output system) of a computer that realizes the information processing apparatus 1, and the like, a RAM (random access memory) that serves as a work area of the information processing apparatus 1, a large-capacity storage apparatus such as an HDD or an SSD that stores an OS (operating system), application programs, and various pieces of information that are referenced when the application programs are executed.

The control unit 3 is a processor such as a CPU or a GPU of the information processing apparatus 1, and functions as the acquisition unit 30, the training data acquisition unit 31, the machine learning unit 32 (the subset generation unit 320 and the learning execution unit 321), and the detection unit 33 by executing programs stored in the storage unit 2.

The acquisition unit 30 reads out, from the storage unit 2, the first training data T1 that includes the first data D1 and the first labels L1 for target task learning, and the second training data T2 that includes the second data D2 and the second labels L2 for watermark detection, and acquires those pieces of data. Note that the number of the first labels L1 of the first training data T1 is based on the target task, and is two if the target task is "dog-and-cat detection", for example. In addition, the number of pieces of the second training data T2 is one, and the second training data T2 corresponds to one of the first labels L1. The acquisition unit 30 acquires, from the storage unit 2, data whose degree of similarity to the plurality of pieces of first data D1 included in the first training data T1 is smaller than the degree of similarity between the plurality of pieces of first data D1 included in the first training data T1, as the second data D2 for the second training data T2. Here, "the degree of similarity" of data may be any index that makes it possible to quantify the relevance between pieces of data, and is a correlation value between pieces of data, as an example.

Note that a configuration can also be adopted in which, instead of storing the second data D2 in the storage unit 2 in advance, the training data acquisition unit 31 generates the second data D2. In this case, the training data acquisition unit 31 generates random images or pattern images as the second data D2. Usually, the first data D1 for target task learning is composed of images that have a certain meaning (e.g., an image of a cat), and thus random images or pattern images artificially generated by the training data acquisition unit 31 have a small correlation with the first data D1. Therefore, the training data acquisition unit 31 can acquire the second data D2 that has a low similarity with the first data D1 by setting random images that have been randomly generated or pattern images as the second data D2. FIG. 1 shows an example of a case where random images generated by the training data acquisition unit 31 are set as the second data D2.

In place of or in addition to generating random images or pattern images, data whose format only is the same as data for target task learning can be set as the second data D2. For example, if the first data D1 that is data for target task learning is composed of "cat images" or "dog images", an image in which a subject other than a cat or dog is captured, such as an image of a bird or a landscape image, can also be set as the second data D2.

In this manner, the acquisition unit 30 acquires the second data D2 such that the degree of similarity between the first data D1 and the second data D2 is smaller than the degree of similarity between pieces of first data D1. Accordingly, the first data D1 and the second data D2 are likely to separate in a feature space. As a result, the information processing apparatus 1 can generate the model parameter P in which the accuracy of detection of a watermark is high.

The description returns to FIG. 2. The machine learning unit 32 generates the model parameter P that constitutes a machine learning model for detecting a target task or a watermark, based on the first training data T1 and the second training data T2. The machine learning unit 32 performs machine learning of the first data D1 for target task learning and the second data D2 for watermark detection at the same time, and can thereby embed a watermark in the model parameter P to be generated. Machine learning that is performed by the machine learning unit 32 will be described later in more detail.

As described above, there are cases where the machine learning unit 32 processes the first data D1 for target task learning that has as much as several hundred thousand to several million images in order to generate accurate model parameter P. In contrast, the second data D2 for watermark detection may have about 100 images at a maximum since it suffices for a watermark for specifying the origin of the model parameter P to be detected from the model parameter P. In this case, the number of pieces of first data D1 is larger than the number of pieces of second data D2 by as much as 4-5 digits in its scale. Accordingly, the second data D2 is smaller than 0.1% of the entire learning data in which the first data D1 and the second data D2 are combined.

Usually, in supervised machine learning, learning tends to be proceeded in order from a feature common with a large number of pieces of training data. Therefore, if the second data D2 for watermark detection is smaller than 0.1% of the entire learning data, there is the possibility that the second data D2 will not be regarded to be important when the machine learning unit 32 executes machine learning, and its contribution rate related to generation of the model parameter P will be small.

In view of this, the machine learning unit 32 according to an embodiment of the present invention sets a contribution rate (the number of times of use) for one piece of the second data D2 in the second training data T2 related to generation of the model parameter P to be larger than a contribution rate (the number of times of use) for one piece of the first data D1 in the first training data T1.

The machine learning unit 32 is provided with the subset generation unit 320 and the learning execution unit 321 in order to realize an increase in the contribution rate related to machine learning of the second data D2. The subset generation unit 320 generates a plurality of subsets constituted by learning data that includes the first training data T1 and the second training data T2.

Here, "subset" is a unit of learning data used when the learning execution unit 321 executes machine learning. In particular, the number of pieces of data included in the first training data T1 out of training data that is handled by the information processing apparatus 1 is huge, and thus it is not realistic to deploy the entire training data to a work memory of the information processing apparatus 1. In view of this, the subset generation unit 320 generates subsets of training data read out from a portion of the first training data T1 and a portion of the second training data T2. The learning execution unit 321 executes machine learning in units of subsets generated by the subset generation unit 320. Accordingly, the information processing apparatus 1 can realize machine learning in which a large amount of training data is used. Furthermore, model parameters can be updated in a short convergence time by repeatedly updating the model parameters that are set in units of subsets. Accordingly, it is possible to increase the update frequency of the model parameter.

More specifically, the learning execution unit 321 uses one of a plurality of subsets generated by the subset generation unit 320, as learning data, and executes machine learning of each of the subsets in order. The subset generation unit 320 generates subsets such that the ratio of the second training data T2 included in each of a plurality of subsets is larger than the ratio of the second training data T2 in the entire learning data.

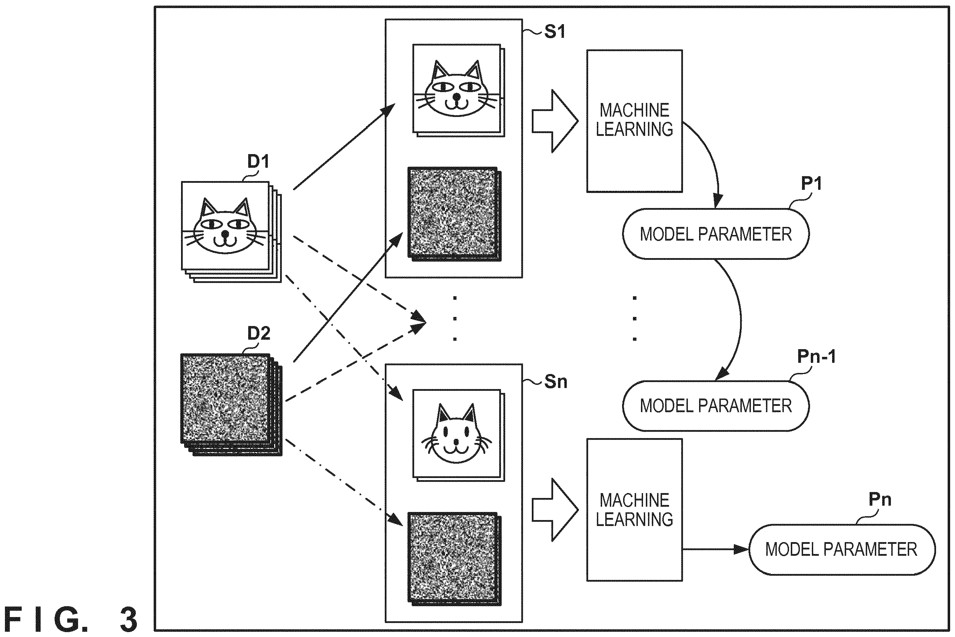

FIG. 3 is a diagram illustrating subset generation processing that is executed by the subset generation unit 320 according to an embodiment of the present invention. The subset generation unit 320 reads out a portion of the first data D1, and also reads out a portion of the second data D2. The subset generation unit 320 combines those portions of data that have been read out, and generates a first subset S1. The subset generation unit 320 generates n subsets, namely, the first subset S1 to an n-th subset Sn by repeating this operation n times, for example, 100 times.

The subset generation unit 320 divides the first data D1 into n pieces, and allocates the n pieces of divided data respectively to n subsets, namely, the first subset S1 to the n-th subset Sn. Accordingly, the number of times the subset generation unit 320 reads out each pieces of data constituting the first data D1 until the learning execution unit 321 ends machine learning using the n subsets, namely the first subset S1 to the n-th subset Sn is one.

On the other hand, the subset generation unit 320 sets the number of times the second data D2 used for generation of subsets is used until the learning execution unit 321 ends machine learning using the n subsets, namely the first subset S1 to the n-th subset Sn to be larger than the number of times the first data D1 is used. In other words, the subset generation unit 320 reads out each piece of data constituting the second data D2 two times or more, until the learning execution unit 321 ends machine learning using the n subsets, namely the first subset S1 to the n-th subset Sn.

For example, the number of pieces of first data D1 is set to 1,000,000, the number of pieces of second data D2 is set to 100, and n is set to 100. At this time, the number of pieces of first data D1 that is set to be included in each subset by the subset generation unit 320 is 10,000 (1,000,000 divided by 100). On the other hand, the subset generation unit 320 reads out the second data D2 a plurality of times, and sets the second data D2 to be included in each subset.

For example, the subset generation unit 320 reads out each piece of the second data D2 repeatedly 50 times in order to configure one subset. As a result, the number of pieces of second data D2 set to be included in each subset by the subset generation unit 320 is 5,000 (100 multiplied by 50). Accordingly, the ratio of the second training data T2 to the entire learning data was about 0.1%, while the ratio of the second training data T2 included in each of the subsets is about 33%.

Note that the subset generation unit 320 may also generate a plurality of subsets from the first training data T1 and new second training data T2 acquired by increasing the number of pieces of the second training data T2 through duplication. Also in this case, the number of pieces of second data D2 included in the second training data T2 increases by the subset generation unit 320 duplicating the second training data T2. As a result, the ratio of the second training data T2 included in each subset is larger than the ratio of the second training data T2 in the entire learning data.

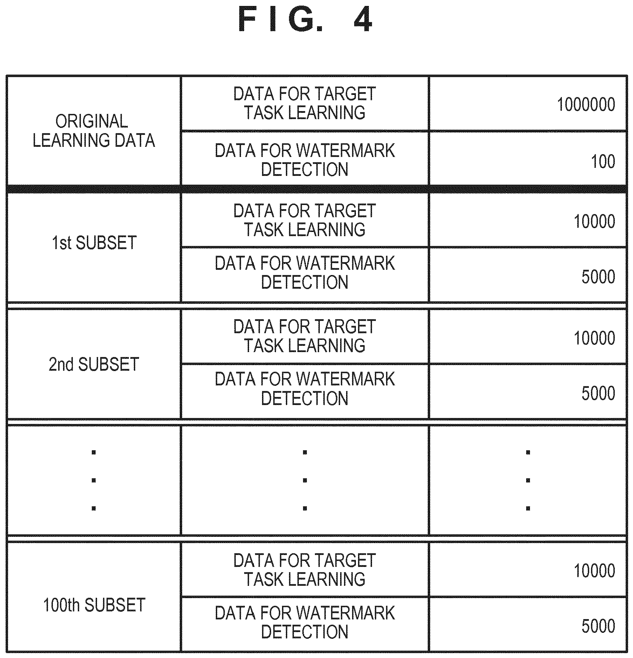

FIG. 4 is a diagram showing the numbers of pieces of training data in original learning data and subsets, in a table format. As shown in FIG. 4, the number of pieces of original first data D1 (data for target task learning) is 1,000,000, and the number of pieces of original second data D2 (data for watermark detection) is 100. On the other hand, in each subset, the number of pieces of first data D1 is 10,000, and the number of pieces of second data D2 is 5,000. Accordingly, in the process of machine learning, it is possible to increase the contribution rate of the second data D2 related to generation of the model parameter P.

When performing machine learning of a plurality of subsets in order, the learning execution unit 321 executes machine learning using the model parameter P generated in prior-stage machine learning as an initial value of the model parameter P in later-stage machine learning. In FIG. 3, a model parameter acquired by the learning execution unit 321performing machine learning of the first subset S1 is a "model parameter P1". The model parameter PI includes knowledge acquired from the first subset S1 by the subset generation unit 320 executing machine learning.

The learning execution unit 321 sets the initial value of the model parameter P when performing machine learning of a subset S2, to the model parameter PI, although it is not illustrated in FIG. 3. After that, similarly, the learning execution unit 321 sets the initial value of the model parameter P when performing machine learning of a subset Sm (1<m≤n), to a model parameter Pm-1. Accordingly, the subset generation unit 320 can execute machine learning while taking over the knowledge acquired from each subset through previous machine learning.

As described above, the machine learning unit 32 divides learning data that includes the first training data T1 and the second training data T2, into a plurality of subsets, and performs machine learning of the subsets in order. Accordingly, even if the amount of the entire learning data exceeds the data amount of the work memory, the machine learning unit 32 can execute learning of the entire learning data. The machine learning unit 32 generates subsets such that the ratio of the second data D2 that constitutes each subset to be higher than the ratio of the second data D2 in the entire learning data, and can thereby increase the contribution rate of the second data D2 related to generation of the model parameter P. Accordingly, the machine learning unit 32 can prevent the second data D2 from being lost due to a large amount of first data D1, and execute learning of the second data D2.

Here, after the learning execution unit 321 has completed machine learning of all of the subsets, the subset generation unit 320 may generate the same or different subset. The learning execution unit 321 may also perform, in order, machine learning of subsets newly generated by the subset generation unit 320. By repeating this, the machine learning unit 32 can increase the accuracy of the model parameter P. The learning execution unit 321 stores the model parameter P generated finally, in the storage unit 2. The learning phase of the information processing apparatus 1 ends here.

Subsequently, the detection phase of the information processing apparatus 1 will be described briefly. The learning phase of the information processing apparatus 1 is a phase in which the information processing apparatus 1 generates the model parameter P based on learning data through machine learning. On the other hand, the detection phase of the information processing apparatus 1 is a phase in which unknown data is processed based on the model parameter P generated by the information processing apparatus 1. As shown in FIG. 1, if the target task of the information processing apparatus 1 is "dog-or-cat discrimination", the information processing apparatus 1 determines whether unknown data is a dog image or a cat image.

Specifically, the detection unit 33 reads out the model parameter P from the storage unit 2. If the output value of the model parameter P when unknown data that has been acquired is input is the label L11, the detection unit 33 determines that the unknown data is a cat image. Also, if the output value of the model parameter P is the label L12, it is determined that the unknown data is a dog image. If the unknown data is not a dog image nor a cat image, the output value of the model parameter P is either the label L11 or the label L12, but the output is not stable, and it is difficult to perform prediction before output. Accordingly, if the unknown data is not a dog image nor a cat image, output of the model parameter P may be considered to tend to be nearly random.

Here, the model parameter P is generated based on not only the first training data T1 but also the second training data T2. Therefore, when the detection unit 33 inputs the second data D2 to a model parameter P, the model parameter P outputs the second label L2 associated in advance with the second data D2 that has been input. In particular, when the detection unit 33 inputs a plurality of pieces of second data D2 to a model parameter P, if the output values of the model parameter P match the second labels L2 associated in advance with the respective pieces of the second data D2, the probability that the model parameter P was subjected to learning of the second training data T2 is very high. Specifically, for example, outputs of a model parameter P when a plurality of pieces of second data D2 are input are totaled for each output value. If the number of times the second label L2 associated in advance is output is larger than or equal to a threshold value, it can be determined that the model parameter P has been reused.

Thus, the detection unit 33 also functions as a detection unit that detects a watermark based on output of a machine learning model (i.e. output of a model parameter P) when the second data D2 included in the second training data is input. Accordingly, the detection unit 33 can determine whether or not a model parameter P whose origin is unknown was generated by the machine learning unit 32, by inputting the second data D2 to the model parameter P.

### Processing Flow of Information Processing That Is Executed by Information Processing Apparatus 1

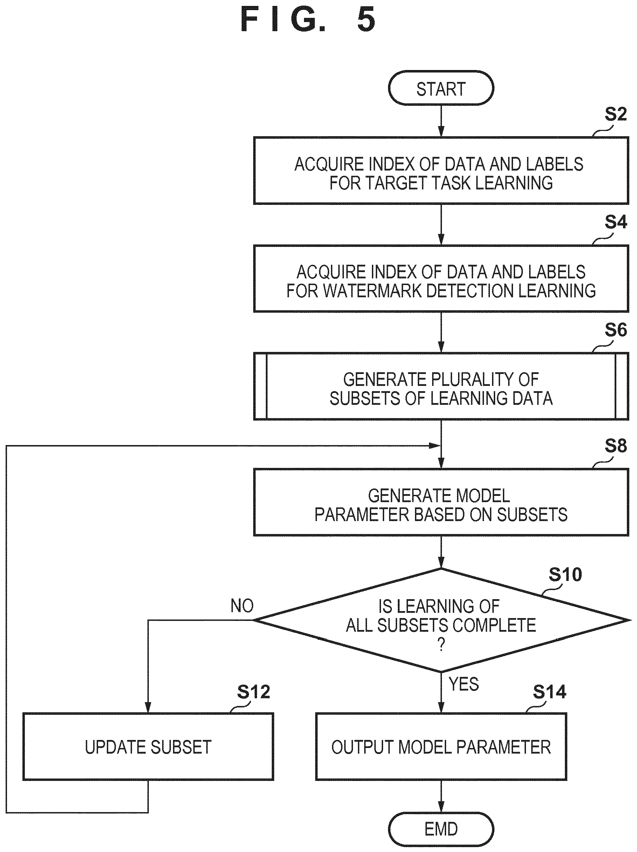

FIG. 5 is a flowchart illustrating a flow of information processing that is executed by the information processing apparatus 1 according to an embodiment of the present invention. The processing in this flowchart is started, for example, when the information processing apparatus 1 is started.

In step S2, the acquisition unit 30 reads out, from the storage unit 2, the index of the first training data T1 that includes the first data D1 and the first labels L1 for target task learning, and acquires the index. In addition, in step S4, the acquisition unit 30 reads out, from the storage unit 2, the index of the second training data T2 that includes the second data D2 and the second labels L2 for watermark detection, and acquires the index. Here, "index" refers to information indicating the storage position of the first data D1 or the second data D2, not the actual first data D1 or second data D2.

In step S6, the subset generation unit 320 generates a plurality of subsets constituted by learning data that includes the first training data T1 and the second training data T2. In step S8, the learning execution unit 321 executes machine learning of the subsets in order, using one of the plurality of subsets generated by the subset generation unit 320, as learning data, and generates the model parameter P.

In step S10, the learning execution unit 321 determines whether or not learning of all of the subsets generated by the subset generation unit 320 is complete. If it is not complete, the learning execution unit 321, in step S12, updates the subset to be used for machine learning, and repeats the processing of step S8 onward.

On the other hand, when learning of all of the subsets generated by the subset generation unit 320 ends, the learning execution unit 321 outputs the generated model parameter P to the storage unit 2 in step S14. When the learning execution unit 321 outputs the model parameter P to the storage unit 2, the processing in this flowchart ends.

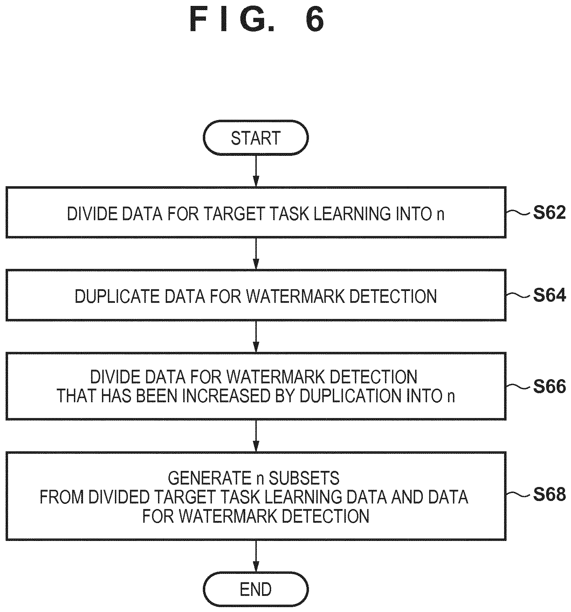

FIG. 6 is a flowchart illustrating an example of a flow of subset generation processing that is executed by the subset generation unit 320 according to an embodiment of the present invention, and is a diagram illustrating step S6 in FIG. 5 in more detail.

In step S62, the learning execution unit 321 divides the first data D1 that is data for target task learning, into n pieces. Also, in step S64, the learning execution unit 321 duplicates the second data D2 in order to increase the number of pieces of second data D2 that is data for watermark detection.

In step S66, the learning execution unit 321 divides the second data D2 that is data for watermark detection, and has been increased through duplication, into n pieces. In step S68, the learning execution unit 321 generates n subsets of learning data from the divided first data D1 and second data D2.

### Effect of Information Processing Apparatus 1 according to Embodiment

As described above, according to the information processing apparatus 1 according to an embodiment of the present invention, it is possible to provide a learning model capable of specifying an origin. In particular, the origin of a learning model generated by the information processing apparatus 1 according to an embodiment of the present invention can be identified even if its model parameter is not publicized, and the learning model is provided in a format of an API (application program interface) or the like.

In addition, the training data acquisition unit 31 generates, as the second data D2, data whose degree of similarity to the first data D1 is smaller than the degree of similarity between pieces of the first data D1, and thereby the first data D1 and the second data D2 are easily separated in the feature space. As a result, the machine learning unit 32 can generate the model parameter P that provides accurate detection of a watermark.

In addition, the subset generation unit 320 generates subsets of learning data such that a contribution rate (the number of times of use) of one piece of the second data D2 related to generation of the model parameter P is higher than a contribution rate (the number of times of use) of one piece of the first data D1. For example, the subset generation unit 320 can generate subsets of learning data such that the average value of the numbers of times of use of pieces of the second data D2 is higher than the average value of the number of times of use of pieces of the first data D1. Alternately, the subset generation unit 320 can generate subsets of learning data such that the numbers of times of use of all of the pieces of the second data D2 are higher than the maximum value of the number of times of use of each piece of the first data D1. Accordingly, the number of pieces of first data D1 and the number of pieces of second data D2 are made similar, and thus the learning execution unit 321 can appropriately learn the second data D2 that is data for watermark detection, and generate the model parameter P.

The present invention has been described above using an embodiment, but the technical scope of the present invention is not limited to the scope described in the above embodiment, and various deformation and modifications can be made within the scope of its gist. For example, a specific embodiment of dispersion and integration of each apparatus is not limited to the above embodiment, and the entirety or a portion thereof can be configured by functional or physical dispersion and integration in arbitrary units. In addition, a new embodiment created through any combination of a plurality of embodiments is also included in the embodiment the present invention. The effect of the new embodiment created through combination includes the effect of the original embodiment.

### Variation

A case has been described above in which a contribution rate of the second data D2, which is data for watermark detection, related to generation of the model parameter P is increased by increasing the number of times the subset generation unit 320 reads out the second data D2. However, the technique for increasing the contribution rate of the second data D2 related to generation of the model parameter P is not limited thereto.

Generally, in supervised learning, an evaluation function that serves as an index for updating the model parameter P in a learning process is used. This evaluation function is a function used for evaluating deviation between a target label and an output value when training data is input to a model parameter P during learning. The larger the deviation of the output value of the model parameter P from the target label is, the more the learning execution unit 321 increases the update amount of the model parameter P.

Now, the degree of deviation between the output value and the first label L1 when the first data D1 is input to a model parameter P during learning is denoted by G1. Similarly, the degree of deviation between the output value and the second label L2 when the second data D2 is input to the model parameter P during learning is denoted by G2. The learning execution unit 321 according to Variation sets an update amount of the model parameter P that is based on the degree of deviation G2, to be larger than an update amount that is based on the degree of deviation G1. Accordingly, even if the degree of deviation G2 and the degree of deviation G1 take the same value, the learning execution unit 321 sets an amount by which the model parameter P is updated based on the degree of deviation G2, to be larger than an amount by which the model parameter P are updated based on the degree of deviation G1.

Accordingly, the learning execution unit 321 can set a contribution rate of one piece of the second data D2 related to generation of the model parameter P, to be higher than a contribution rate of one piece of the first data D1.

Note that the ratio of the update amount that is based on the degree of deviation G1 to the update amount that is based on the degree of deviation G2 may be determined through experiments, in consideration of the number of pieces of the first data D1, the number of pieces of the second data D2, and the like. For example, when the number of pieces of the first data D1 is 1,000,000, and the number of pieces of the second data D2 is 100, the ratio of the update amount that is based on the degree of deviation G1 to the update amount that is based on the degree of deviation G2 is defined as 5000. Accordingly, the contribution rate of one piece of the second data D2 related to generation of the model parameter P can be similar to the contribution rate when the number of pieces of the second data D2 is 500,000.

Note that the present invention can be realized by a computer program for causing a computer to operate as the above information processing apparatus 1 when executed by one or more processors of the computer, or a computer program for causing the computer to execute the above-described information processing method. These computer programs are stored in a computer-readable storage medium, or can be distributed via a network.

The present invention is not limited to the above embodiment, and various modifications and alterations may be made without departing from the spirit and scope of this invention. Therefore, the following claims are attached in order to publicize the scope of the present invention.

This application claims priority from Japanese Patent Application No. 2017-072610, filed March 31, 2017, which is hereby incorporated by reference herein.

## Claims

1. An information processing apparatus comprising:
acquisition means for acquiring first training data that includes data and a label for target task learning, and second training data that includes data and a label for watermark detection; and
learning means for generating a model parameter constituting a machine learning model for detecting a target task or a watermark based on the first training data and the second training data.

2. The information processing apparatus according to claim 1,
wherein the acquisition means acquires, as data for the second training data, data whose degree of similarity to a plurality of pieces of data included in the first training data is smaller than a degree of similarity between a plurality of pieces of data included in the first training data.

3. The information processing apparatus according to claim 1 or 2,
wherein the learning means sets a contribution rate of one piece of data included in the second training data related to generation of the model parameter to be larger than a contribution rate of one piece of data included in the first training data.

4. The information processing apparatus according to any one of claims 1 to 3,
wherein the learning means includes:
subset generation means for generating a plurality of subsets constituted by learning data that includes the first training data and the second training data, and
learning execution means for performing machine learning of the subsets in order, using one subset out of the plurality of subsets as learning data, and
the subset generation means generates the subsets such that a ratio of second training data included in each of the plurality of subsets is higher than a ratio of second training data in the entire learning data, and
the learning execution means executes machine learning, using a model parameter generated in prior-stage machine learning, as an initial value of a model parameter in later-stage machine learning.

5. The information processing apparatus according to claim 4,
wherein the subset generation means sets a frequency of the second training data used for generation of the subsets to be higher than a frequency of use of the first training data until generation of the model parameter is completed by the learning execution means.

6. The information processing apparatus according to claim 4 or 5,
wherein the subset generation means generates the plurality of subsets from the first training data and new second training data in which the number of pieces of data is increased by duplicating the second training data.

7. The information processing apparatus according to any one of claims 1 to 6, further comprising:
detection means that detects a watermark based on output of a machine learning model constituted by the model parameter when the second training data is input.

8. An information processing method,
wherein a processor executes:
acquiring first training data that includes data and a label for target task learning,
acquiring second training data that includes data and a label for watermark detection, and
generating a model parameter constituting a machine learning model for detecting a target task or a watermark based on the first training data and the second training data.

9. A computer-readable storage medium that stores a computer program,
wherein, when executed by one or more processors of a computer, the computer program causes the computer to:
acquire first training data that includes data and a label for target task learning,
acquire second training data that includes data and a label for watermark detection, and
generate a model parameter constituting a machine learning model for detecting a target task or a watermark based on the first training data and the second training data.
